# EUROPEAN PATENT APPLICATION

(11) **EP 4 567 382 A1**
(43) Date of publication of application: **11.06.2025**
(21) Application number: 23849481.9
(22) Date of filing: 02.08.2023
(51) Int. Cl.: G01F 1/66, F16B 43/00, G01P 5/24

(54) **ULTRASONIC FLOWMETER**

(30) Priority: 03.08.2022 CN 202210929417
(71) Applicant: Goldcard Smart Group Co., Ltd., Wenzhou, Zhejiang 325600 (CN); TANCY Instrument Group Co., Ltd., Wenzhou, Zhejiang 325800 (CN)
(72) Inventor: DING, Yuanming, Wenzhou, Zhejiang 325600 (CN); SONG, Xingjian, Wenzhou, Zhejiang 325600 (CN)
(74) Representative: Vossius & Partner Patentanwälte Rechtsanwälte mbB
(86) International application number: PCT/CN2023/110866
(87) International publication number: WO 2024/027777

(57) **Abstract**

The present application provides an ultrasonic flowmeter, including a body, a transducing assembly, a limiting device and a gasket assembly. An accommodating cavity is provided in the body, a side wall of the body is provided with a fixing hole in communication with the accommodating cavity, and the transducing assembly, the gasket assembly and the limiting device are located in the fixing hole; the transducing assembly is hermetically connected with an inner peripheral wall of the fixing hole, a first end of the transducing assembly faces the accommodating cavity, a second end of the transducing assembly faces the limiting device and is in clearance fit with the limiting device, the gasket assembly is sleeved on the second end of the transducing assembly, and the limiting device is in contact with the transducing assembly by means of the gasket assembly; the limiting device is fixedly connected with the inner peripheral wall of the fixing hole; the gasket assembly includes a gasket, and at least one surface of the gasket is provided with one or more protrusions. In the ultrasonic flowmeter of the embodiments of the present application, the provision of the gasket assembly reduces the effect of clutter from the body on the transducing assembly, thereby improving the measurement precision of the ultrasonic flowmeter.

## Description

The present application claims priority to Chinese Patent Application No. 202210929417.0, filed with the China National Intellectual Property Administration on August 3, 2022 and entitled "ULTRASONIC FLOWMETER", the disclosure of which is hereby incorporated by reference in its entirety.

### TECHNICAL FIELD

The present application relates to the technical field of fluid metering devices and, in particular, to an ultrasonic flowmeter.

### BACKGROUND

An ultrasonic flowmeter is a meter for measuring fluid flow by detecting the effect of fluid flow on an ultrasonic wave, the core component thereof is a transducer, and the main function of the transducer is to send an ultrasonic vibration and receive the ultrasonic vibration.

In the related art, a transducer is fixedly connected with a body of an ultrasonic flowmeter. Noise outside the body, as well as clutter formed by vibration generated by a collision between a surface of the body and an external object may be transmitted to the transducer through a connection between the transducer and the body, thereby affecting an ultrasonic signal received by the transducer. In order to reduce the effect of the clutter on the transducer, signal processing is generally used to filter out clutter or noise, so as to perform filtering processing on a signal received by the transducer, thereby filtering out clutter received by the transducer.

However, the ultrasonic flowmeter in the aforementioned related art has a poor filtering effect on clutter, and the transducer receives a lot of clutter, resulting in a low measurement accuracy of the ultrasonic flowmeter.

### SUMMARY

Embodiments of the present application provide an ultrasonic flowmeter, which is used for solving the technical problem in the related art that ultrasonic flowmeters have poor filtering effect on clutter, and a transducer receives a lot of clutter, resulting in low measurement accuracy of ultrasonic flowmeters.

In order to achieve the aforementioned object, the embodiments of the present application provide the following technical solutions.

An embodiment of the present application provides an ultrasonic flowmeter, including: a body, a transducing assembly, a limiting device and a gasket assembly;
an accommodating cavity for a fluid to be measured to flow is provided in the body, a side wall of the body is provided with a fixing hole in communication with the accommodating cavity, and the transducing assembly, the gasket assembly and the limiting device are located in the fixing hole;
the transducing assembly is hermetically connected with an inner peripheral wall of the fixing hole, a first end of the transducing assembly faces the accommodating cavity, a second end of the transducing assembly faces the limiting device and is in clearance fit with the limiting device, the gasket assembly is sleeved on the second end of the transducing assembly, and the limiting device is in contact with the transducing assembly by means of the gasket assembly; the limiting device is fixedly connected with the inner peripheral wall of the fixing hole;
the gasket assembly includes at least one gasket, and at least one surface of the at least one gasket is provided with one or more protrusions.

On the basis of the above technical solution, the following improvements may be made in the present application.

In one possible implementation, the gasket is provided with a through hole, and the gasket is sleeved on the second end of the transducing assembly by means of the through hole;
each of the protrusions has a contact surface, and a sum of areas of all contact surfaces is smaller than a surface area of a side, where the protrusions are located, of the gasket.

In one possible implementation, the gasket assembly includes a plurality of gaskets, and the plurality of gaskets include a metal gasket and/or a non-metal gasket.

In one possible implementation, the gasket assembly includes three gaskets, where two of the three gaskets are metal gaskets, and the other gasket is the non-metal gasket;
where one of the metal gaskets is disposed between the non-metal gasket and the limiting device, and the other of the metal gaskets is disposed between the non-metal gasket and the transducing assembly;
the two metal gaskets are both provided with the protrusions, respectively.

In one possible implementation, the gasket assembly includes four gaskets, where three gaskets are metal gaskets, and the other gasket is the non-metal gasket;
where two of the metal gaskets are disposed between the non-metal gasket and the limiting device;
where the other of the metal gaskets is disposed between the non-metal gasket and the transducing assembly;
the metal gasket close to the limiting device and the metal gasket close to the transducing assembly are provided with the protrusions, respectively.

In one possible implementation, a material of the non-metal gasket is plastic;
where the plastic is one of polyphenylene sulfide, polyimide, polyether ether ketone, liquid crystal polymer or polysulfone.

In one possible implementation, the limiting device is provided with a communication hole along an installation direction of the limiting device, the second end is located in the communication hole, and the second end located in the communication hole is in clearance fit with the communication hole;
a surface of the limiting device which is in contact with the gasket assembly is provided with a groove or a projection, the groove is in communication with the communication hole;
an outer peripheral wall of the limiting device is tightly connected with the inner peripheral wall of the fixing hole through threads,
or the outer peripheral wall of the limiting device is fixedly connected with the inner peripheral wall of the fixing hole through a circlip.

In one possible implementation, the transducing assembly includes a transducer and an isolating device;
the transducer has the first end and the second end;
the isolating device is sleeved on the first end along an axial direction of the transducer, and the first end is hermetically connected with the isolating device, so that the first end is hermetically connected with the fixing hole by means of the isolating device;
a side of the first end facing the gasket has a first contact surface abutting against the gasket, a side of the isolating device facing the gasket has a second contact surface abutting against the gasket, so that the protrusions on the gasket is in contact with the first contact surface and/or the second contact surface.

In one possible implementation, the first end is provided with a connecting part, the connecting part is hermetically connected with the isolating device; the connecting part has the first contact surface.

In one possible implementation, the isolating device includes an isolating sleeve and at least one first sealing ring;
the isolating sleeve is sleeved on the connecting part, and the isolating sleeve is hermetically connected with the connecting part;
an outer peripheral wall of the isolating sleeve is provided with at least one first annular groove, the first annular groove is wound around the outer peripheral wall of the isolating sleeve, the first sealing ring is fixed in the first annular groove, the isolating sleeve is hermetically connected with the inner peripheral wall of the fixing hole through the first sealing ring, and a first gap is provided between an outer wall of the isolating sleeve and the inner peripheral wall of the fixing hole.

In one possible implementation, the transducer further includes at least one second sealing ring;
an outer peripheral wall of the connecting part is provided with at least one second annular groove, the second annular groove is wound around the outer peripheral wall of the connecting part, the second sealing ring is fixed in the second annular groove, and the connecting part is hermetically connected with the isolating sleeve through the second sealing ring; and a second gap is provided between an outer wall of the connecting part and an inner peripheral wall of the isolating sleeve.

The embodiments of the present application provide an ultrasonic flowmeter, where the limiting device is fixedly connected with the fixing hole of the body, the second end of the transducing assembly is in clearance fit with the limiting device, and the gasket assembly is sleeved on the second end. So that the transducing assembly forms indirect contact with the body at the second end in sequence through the gasket assembly and the limiting device, and the strength of the clutter transmitted from the body to the transducing assembly is reduced through the gasket assembly, thereby reducing the effect of clutter from the body on the transducing assembly, and further improving the measurement accuracy of the ultrasonic flowmeter.

### BRIEF DESCRIPTION OF DRAWINGS

To describe the technical solutions in the embodiments of the present application or in the prior art more clearly, the following briefly introduces the accompanying drawings needed for describing the embodiments or the prior art. Apparently, the accompanying drawings in the following description illustrate some embodiments of the present application, and persons of ordinary skill in the art may still derive other drawings from these accompanying drawings without creative effort.
FIG. 1 is a sectional view of an ultrasonic flowmeter according to an embodiment of the present application.
FIG. 2 is a partial sectional view of A in FIG. 1.
FIG. 3 is a structural schematic view of a gasket having a protrusion according to an embodiment of the present application.
FIG. 4 is a structural schematic view of another gasket having a protrusion according to an embodiment of the present application.
FIG. 5 is an exploded view of a limiting device, a gasket assembly, and a transducing assembly in FIG. 2.
FIG. 6 is a structural schematic view of the limiting device in FIG. 3.
FIG. 7 is an exploded view of the transducing assembly in FIG. 3.
FIG. 8 is a schematic cross-sectional view of the transducing assembly in FIG. 3.
FIG. 9 is a schematic cross-sectional view of another transducing assembly in FIG. 3.

Description of the reference numbers:
100-body;
110-accommodating cavity; 120-fixing hole;
200-transducing assembly;
210-transducer; 220-isolating device; 211-connecting part;
212-second sealing ring; 213-second annular groove; 221-isolating sleeve;
222-first sealing ring; 223-first annular groove; 214-first end;
215-second end; 216-first contact surface; 217-second gap;
224-second contact surface; 225-first gap;
300-limiting device;
310-communication hole; 320-groove;
400-gasket assembly;
410-gasket; 420-protrusion; 430-contact surface; 411-metal gasket;
412-non-metal gasket; 413-through hole.

### DESCRIPTION OF EMBODIMENTS

As described in the background, in order to reduce the effect of clutter on a transducer, signal processing is generally used to filter out clutter or noise, so as to perform filtering processing on a signal received by the transducer, thereby filtering out clutter received by the transducer.

However, an ultrasonic flowmeter in the related art has a poor filtering effect on clutter, and the transducer receives a lot of clutter, resulting in a low measurement accuracy of the ultrasonic flowmeter. The reason for this problem is that by means of signal processing, just clutter in all signals received by the transducer is indirectly processed, and the transducer cannot be prevented from receiving clutter signals at the beginning. Therefore, when the ultrasonic flowmeter is faced with a relatively complex usage environment, this indirect secondary-processing on the signals cannot completely eliminate the effect of clutter or noise on the signals received by the transducer. In addition, filtering the signals received by the transducer needs complex software and hardware design, thereby increasing the production complexity and production cost of the ultrasonic flowmeter.

With regard to the aforementioned technical problems, the embodiments of the present application provide an ultrasonic flowmeter, where a limiting device is fixedly connected with a fixing hole of a body, a second end of a transducing assembly is in clearance fit with the limiting device, and a gasket assembly is sleeved on the second end. So that the transducing assembly forms indirect contact with the body at the second end through the gasket assembly and the limiting device, and the strength of the clutter transmitted from the body to the transducing assembly is reduced through the gasket assembly, thereby reducing the effect of clutter from the body on the transducing assembly, and further improving the measurement accuracy of the ultrasonic flowmeter.

To make the aforementioned objectives, features, and advantages of the embodiments of the present application clearer and more comprehensible, the following clearly and completely describes the technical solutions in the embodiments of the present application with reference to the accompanying drawings in the embodiments of the present application. Apparently, the embodiments to be described are only a part rather than all of the embodiments of the present application. Based on the embodiments of the present application, all other embodiments obtained by a person of ordinary skill in the art without creative efforts shall belong to the scope of protection of the present application.

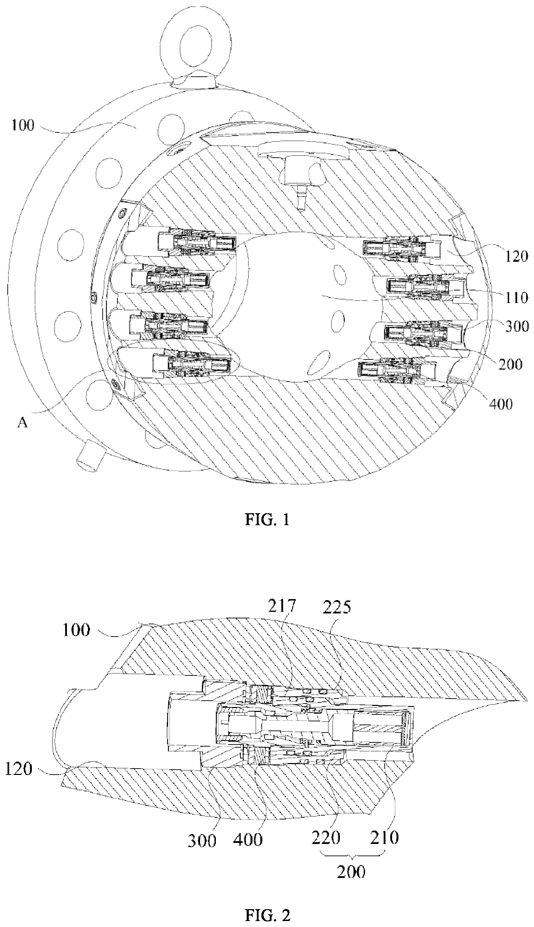

Referring to FIG. 1 to FIG. 4, an embodiment of the present application provides an ultrasonic flowmeter, including: a body 100, a transducing assembly 200, a limiting device 300, and a gasket assembly 400. An accommodating cavity 110 for a fluid to be measured to flow is provided in the body 100, a side wall of the body 100 is provided with a fixing hole 120 in communication with the accommodating cavity 110, and the transducing assembly 200, the gasket assembly 400 and the limiting device 300 are located in the fixing hole 120. The transducing assembly 200 is hermetically connected with an inner peripheral wall of the fixing hole 120, a first end 214 of the transducing assembly 200 faces the accommodating cavity 110, and a second end 215 of the transducing assembly 200 faces the limiting device 300 and is in clearance fit with the limiting device 300. The gasket assembly 400 is sleeved on the second end 215 of the transducing assembly 200, and the limiting device 300 is in contact with the transducing assembly 200 by means of the gasket assembly 400. The limiting device 300 is fixedly connected with the inner peripheral wall of the fixing hole 120. The gasket assembly 400 includes at least one gasket 410, and at least one surface of the at least one gasket 410 is provided with one or more protrusions 420.

Referring to FIG. 1 and FIG. 2, in the present embodiment, the body 100 of the ultrasonic flowmeter may be connected to a pipeline in which a fluid to be measured is located, so that the fluid to be measured can flow through the accommodating cavity 110 of the body 100, thereby enabling the transducing assembly 200 located in the fixing hole 120 to send ultrasonic waves towards the fluid to be measured and receive ultrasonic waves that have been acted on the fluid so as to measure the flow rate of the fluid. That is to say, when the accommodating cavity 110 is in communication with the fixing hole 120, the fluid flowing through the accommodating cavity 110 may enter the fixing hole 120. Therefore, in order to prevent the fluid from leaking out of the body 100 through the fixing hole 120, the transducing assembly 200 needs to be hermetically connected with the inner peripheral wall of the fixing hole 120.

Referring to FIG. 1, in a specific implementation, the body 100 includes a plurality of fixing holes 120, the plurality of fixing holes 120 are all arranged in a radial direction of the body 100, and each fixing hole 120 is internally provided with one transducing assembly 200, one limiting device 300, and one gasket assembly 400. In an exemplary embodiment, the gasket assembly 400 is sleeved on the second end 215 of the transducing assembly 200, and then an assembly of the transducing assembly 200 and the gasket assembly 400 is inserted into the fixing hole 120, and then the limiting device 300 is inserted into the fixing hole 120 from the outer side of the body 100, and abuts against the gasket assembly 400.

Referring to FIG. 1 and FIG. 2, in some embodiments, the first end 214 of the transducing assembly 200 faces the accommodating cavity 110, and the first end 214 may serve as a working end of the transducing assembly 200 for sending and receiving ultrasonic waves to and from the fluid inside the accommodating cavity 110. In order to better send and receive ultrasonic waves, the first end 214 is not in direct contact with the inner peripheral wall of the fixing hole 120.

Referring to FIG. 2, in some embodiments, the second end 215 of the transducing assembly 200 is in clearance fit with the limiting device 300, the second end 215 of the transducing assembly 200 is sleeved with the gasket assembly 400, so that the transducing assembly 200 is in indirect contact with the limiting device 300 through the gasket assembly 400. Therefore, the clutter or noise transmitted from the body 100 to the limiting device 300 is prevented from being transmitted to the transducing assembly 200 directly through the limiting device 300, and thus the strength of the clutter transmitted to the transducing assembly 200 is reduced.

Referring to FIG. 2 to FIG. 5, in some embodiments, the gasket assembly 400 may include at least one gasket 410. The clutter is absorbed by the gasket assembly 400 when passing through the gasket assembly 400, thereby reducing the strength of the clutter and reducing the effect of the clutter on the transducing assembly 200. At least one surface of at least one gasket 410 in the gasket assembly 400 is provided with a protrusion 420, that is to say, one side surface of the gasket 410 or two opposite side surfaces of the gasket 410 may be provided with a protrusion 420, so that the protrusion(s) 420 on the gasket 410 may face towards the limiting device 300, or face towards the transducing assembly 200, and may also face towards both the limiting device 300 and the transducing assembly 200.

It should be understood that when protrusions 420 of gaskets 410 face the limiting device 300, the protrusion 420 of one gasket 410 may be in contact with the limiting device 300, or may be in contact with an adjacent gasket 410. For example, when the gasket assembly 400 has one gasket 410, the protrusion 420 on the gasket 410 may be in contact with the limiting device 300. When the gasket assembly 400 has two gaskets 410 and both of the two gaskets 410 have protrusions 420, the protrusion 420 of one gasket 410 may be in contact with the limiting device 300, and the protrusion 420 of the other gasket 410 may be in contact with the adjacent gasket 410. Similarly, when protrusions 420 on gaskets 410 face the transducing assembly 200, the protrusion 420 on one gasket 410 may be in contact with the transducing assembly 200, or may be in contact with an adjacent gasket 410. For example, when the gasket assembly 400 has one gasket 410, the protrusion 420 on the gasket 410 may be in contact with the transducing assembly 200. When the gasket assembly 400 has two gaskets 410 and both of the two gaskets 410 have protrusions 420, the protrusion 420 of one gasket 410 may be in contact with the transducing assembly 200, and the protrusion 420 of the other gasket 410 may be in contact with the adjacent gasket 410.

In an exemplary embodiment, when both two opposite side surfaces of a gasket 410 have protrusions 420, the protrusions 420 on one gasket 410 may be in contact with both the transducing assembly 200 and the limiting device 300, or in contact with both the transducing assembly 200 and an adjacent gasket 410, or in contact with both the limiting device 300 and an adjacent gasket 410, or in contact with two adjacent gaskets 410. For example, when the gasket assembly 400 has one gasket 410, the protrusions 420 on the gasket 410 may be in contact with both the transducing assembly 200 and the limiting device 300. For another example, when the gasket assembly 400 has three gaskets 410 and the two side surfaces of one gasket 410 have protrusions 420, the protrusions 420 on the gasket 410 may be in contact with both the limiting device 300 and an adjacent gasket 410 if the gasket 410 having the protrusions 420 is disposed close to the limiting device 300; the protrusions 420 on the gasket 410 may be in contact with both the transducing assembly 200 and an adjacent gasket 410 if the gasket 410 having the protrusions 420 is disposed close to the transducing assembly 200; and the protrusions 420 on the gasket 410 may be in contact with both two adjacent gaskets 410 if the gasket 410 having the protrusions 420 is disposed between two gaskets 410 having no protrusion 420.

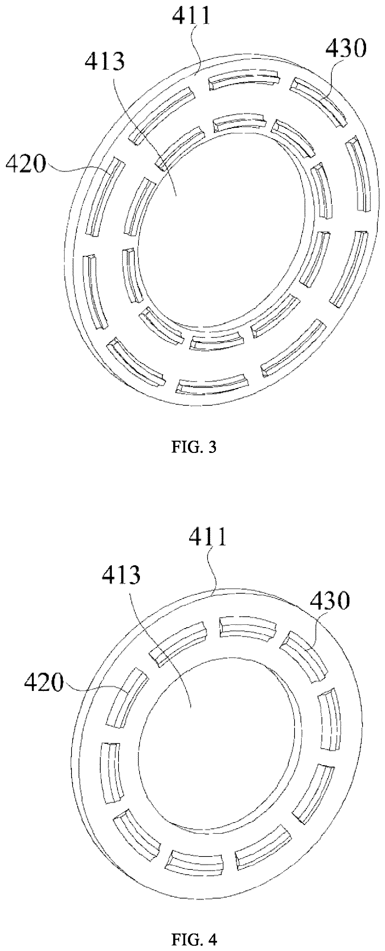

Referring to FIG. 3 and FIG. 4, in a specific implementation, one side surface of a gasket 410 may be provided with one protrusion 420. For example, the one protrusion 420 may be an annular protrusion or a fold-line-shaped protrusion, and the annular protrusion may be concentric with the gasket 410. The annular protrusion may be circular or polygonal annular. One side surface of a gasket 410 may also be provided with a plurality of protrusions 420. For example, the plurality of protrusions 420 may be a plurality of annular protrusions mentioned above. When one side surface of a gasket 410 is provided with two annular protrusions, the two annular protrusions may be in contact with different regions of the transducing assembly 200 respectively.

Referring to FIG. 3 and FIG. 4, in some embodiments, a plurality of protrusions 420 may be at least one of bar-shaped protrusions, block-shaped protrusions, convex-plate-shaped protrusions and arc-shaped protrusions. When the plurality of protrusions 420 are all arc-shaped protrusions, the plurality of arc-shaped protrusions may enclose to form a discontinuous annular protrusion that is coaxial with the gasket 410 (as shown in FIG. 3), and the discontinuous annular protrusion may be multiple in number. In an exemplary embodiment, when one side surface of a gasket 410 is provided with two discontinuous annular protrusions (as shown in FIG. 4), the two discontinuous annular protrusions may be in contact with different regions of the transducing assembly 200, respectively.

It should be noted that the gasket assembly 400 in the embodiments of the present application may include at least one gasket 410. For example, the gasket assembly 400 may include one gasket 410 or a plurality of gaskets 410. When the gasket assembly 400 includes a plurality of gaskets 410, the plurality of gaskets 410 are all sleeved on the second end 215 of the transducing assembly 200. The gasket assembly 400 may include two gaskets 410, three gaskets 410, four gaskets 410, or even more gaskets 410. The greater the number of gaskets 410, the more advantageous it is to lengthen the path of the clutter transmitted from the limiting device 300 to the transducing assembly 200, thereby reducing the strength of the clutter to some degree. Where, the number of the gasket 410 may be set according to practical requirements.

The embodiments of the present application provide an ultrasonic flowmeter, where the limiting device 300 is fixedly connected with the fixing hole 120 of the body 100, the second end 215 of the transducing assembly 200 is in clearance fit with the limiting device 300, and the gasket assembly 400 is sleeved on the second end 215. So that the transducing assembly 200 forms indirect contact with the body 100 at the second end 215 in sequence through the gasket assembly 400 and the limiting device, and the strength of the clutter transmitted from the body 100 to the transducing assembly 200 is reduced through the gasket assembly 400, thereby reducing the effect of clutter from the body on the transducing assembly 200, and further improving the measurement accuracy of the ultrasonic flowmeter.

Further, because the connecting structure between the transducing assembly 200 and the body 100 is improved, it is unnecessary to perform secondary signal processing through complicated software and hardware design, thereby reducing the production cost of the ultrasonic flowmeter, and simplifying the preparation process of the ultrasonic flowmeter.

Referring to FIG. 3 to FIG. 5, on the basis of the foregoing embodiments, a gasket 410 is provided with a through hole 413, and the gasket 410 is sleeved on the second end 215 of the transducing assembly 200 by means of the through hole 413. Each protrusion has a contact surface 430, and a sum of areas of all contact surfaces 430 is smaller than a surface area of one side of a gasket where protrusions are located.

Referring to FIG. 1 to FIG. 4, in the present embodiment, an end, away from a gasket 410, of each protrusion 420 on the gasket 410 has a contact surface 430, and a sum of areas of all contact surfaces 430 is smaller than the surface area of one side of the gasket 410 where protrusions 420 are located. The contact surfaces 430 may be in contact with the limiting device 300, or in contact with an adjacent gasket 410, and may also be in contact with the transducing assembly 200.

In an exemplary embodiment, when contact surfaces 430 are located between protrusions 420 and the limiting device 300, and the sum of areas of the plurality of contact surfaces 430 should be at least less than the surface area of the limiting device 300 facing the gasket 410. So that the clutter on the limiting device 300 is transmitted to the gasket 410 through the plurality of contact surfaces 430, thereby reducing the transmission path of the clutter between the limiting device 300 and the gasket 410, and further reducing the amount of clutter transmitted from the limiting device 300 to the gasket 410.

In another embodiment, when contact surfaces 430 are located between protrusions 420 and an adjacent gasket 410, and the sizes of two adjacent gaskets 410 are the same, so that the clutter on the gaskets 410 may be transmitted through the contact surface 430, thereby reducing the transmission path of the clutter between the two gaskets 410, and further reducing the transmission amount of the clutter between the two adjacent gaskets 410.

In another embodiment, when contact surfaces 430 are located between protrusions 420 and the transducing assembly 200, the sum of the areas of the plurality of contact surfaces 430 should be at least less than the surface area of the transducing assembly 200 facing the gasket 410. So that the clutter on the gasket 410 may be transmitted to the transducing assembly 200 through the plurality of contact surfaces 430, thereby reducing the transmission path of the clutter between the gasket 410 and the transducing assembly 200, and further reducing the amount of clutter transmitted from the gasket 410 to the transducing assembly 200.

In an exemplary embodiment, when the gasket assembly 400 has one gasket 410 and both two opposite side surfaces of the gasket 410 have protrusions 420, the protrusion 420 on the side surface of the gasket 410 facing the limiting device 300 is in contact with the limiting device 300. Because the contact area between the protrusion 420 and the limiting device 300 is smaller than the contact area when the side surface of the gasket 410 is in contact with the limiting device 300, so the amount of clutter transmitted from the limiting device 300 to the gasket 410 is reduced, thereby reducing the effect of the clutter on the transducing assembly 200. Similarly, the protrusion 420 on the side surface of the gasket 410 facing the transducing assembly 200 is in contact with the transducing assembly 200, and the contact area between the protrusion 420 and the transducing assembly 200 is less than the contact area when the side surface of the gasket 410 is in contact with the transducing assembly 200, thereby reducing the amount of clutter transmitted from the gasket 410 to the transducing assembly 200, and further reducing the effect of the clutter on the transducing assembly 200.

Referring to FIG. 2 to FIG. 5, in a specific implementation, one or more protrusions 420 are disposed on at least one surface of at least one gasket 410. So the contact area between the limiting device 300 and the gasket 410, or between adjacent gaskets 410, or between the gasket 410 and the transducing assembly 200 can be reduced, thereby reducing the amount of clutter transmitted from the limiting device 300 to the transducing assembly 200 through the gasket assembly 400, and further improving the measurement accuracy of the ultrasonic flowmeter.

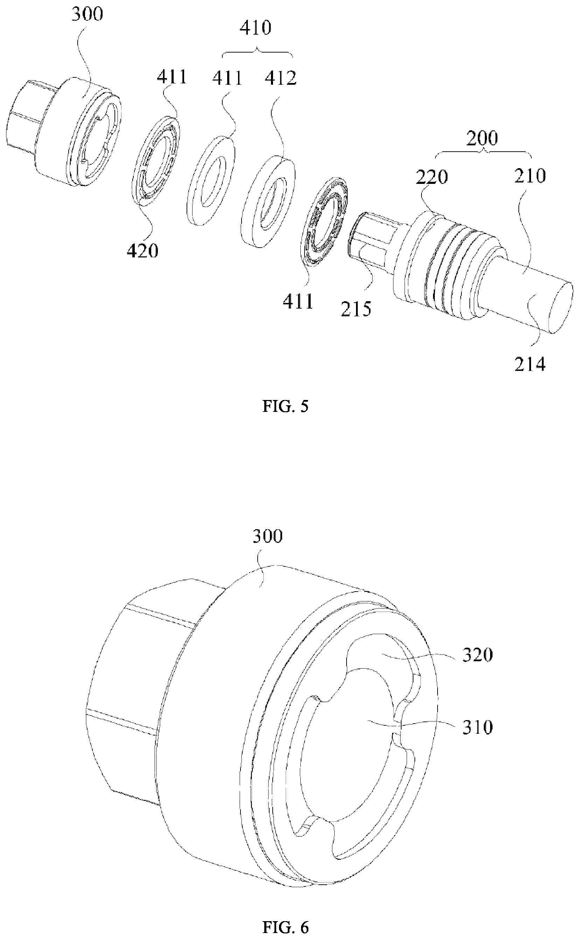

Referring to FIG. 5, on the basis of the above embodiments, the gasket assembly 400 includes a plurality of gaskets 410, and the plurality of gaskets 410 may include a metal gasket 411 and/or a non-metal gasket 412.

Referring to FIG. 5, in the present embodiment, a plurality of gaskets 410 may be metal gaskets 411. When a fluid passes through the accommodating cavity 110 of the body 100, the fluid may generate a pressure having a certain strength, which is applied to the transducing assembly 200. The metal gaskets 411 have a better press resistant performance and can prolong the service life of the gaskets 410. For example, the metal material of the metal gasket 411 may be iron alloy, iron, copper alloy, copper, aluminum alloy, or the like. A plurality of gaskets may also be non-metal gaskets 412. The non-metal gaskets 412 may be made of a material having the performances of shock absorption and noise reduction. By disposing the non-metal gaskets 412, vibration caused by clutter can be absorbed, thereby reducing the strength of the clutter, and further reducing the effect of the clutter on the transducing assembly 200. A plurality of gaskets 410 may also include both a metal gasket 411 and a non-metal gasket 412. By using the combination of the metal gasket 411 and the non-metal gasket 412, it is possible to take into account both the service life of the gaskets 410 and the reduction of the effect of clutter on the transducing assembly 200.

It should be understood that each of the non-metal gasket 412 and the metal gasket 411 may be provided with a protrusion 420. When a plurality of gaskets 410 are metal gaskets 411, at least one of the metal gaskets 411 is provided with a protrusion 420, so that the metal gasket 411 is in contact with the transducing assembly 200 at least through the protrusion 420. When a plurality of gaskets 410 are non-metal gaskets 412, at least one of the non-metal gaskets 412 is provided with a protrusion 420, so that the non-metal gasket 412 is in contact with the transducing assembly 200 at least through the protrusion 420. When a plurality of gaskets 410 include both a metal gasket 411 and a non-metal gasket 412, each of the metal gasket 411 and the non-metal gasket 412 may be provided with a protrusion 420, so that the metal gasket 411 is in contact with the transducing assembly 200 at least through the protrusion 420, or the non-metal gasket 412 is in contact with the transducing assembly 200 at least through the protrusion 420.

In an exemplary embodiment, a gasket 410 having a protrusion 420 in the gasket assembly 400 may be a metal gasket 411 or a non-metal gasket 412. When the gasket assembly 400 has three gaskets 410, where two gaskets 410 may be metal gaskets 411, and the other may be a non-metal gasket 412, the non-metal gasket 412 may be disposed between two metal gaskets 411. The metal gasket 411 close to the transducing assembly 200 is provided with a protrusion 420, which can reduce the amount of clutter transmitted to the transducing assembly 200. By disposing the non-metal gasket 412, the strength of the clutter transmitted from the limiting device to other metal gasket 411 can be reduced. As another example, any two of the gasket assembly 400 may be non-metal gaskets 412, the other is a metal gasket 411, and gaskets 410 each of which has a protrusion 420 may be two non-metal gaskets 412.

On the basis of the above embodiments, a material of the non-metal gasket 412 is plastic, where the plastic is one of polyphenylene sulfide, polyimide, polyether ether ketone, liquid crystal polymer or polysulfone.

It should be noted that, the plastic may be a special engineering plastic with high comprehensive performance and a long-term use temperature above 150°C, and the special engineering plastic may have good effects of shock absorption and noise reduction. By using the special engineering plastic, the non-metal gasket 412 may have improved functions of shock absorption and noise reduction, thereby reducing the intensity and the amount of clutter or noise transmitted to the transducing assembly 200, further improving the signal precision of the transducing assembly 200, and further improving the measurement precision of the ultrasonic flowmeter.

On the basis of the above embodiments, the gasket assembly 400 includes three gaskets 410, where two of the three gaskets 410 are metal gaskets 411, and the other gasket is a non-metal gasket 412. Where one metal gasket 411 is arranged between the non-metal gasket 412 and the limiting device 300, the other metal gasket 411 is arranged between the non-metal gasket 412 and the transducing assembly 200, and each of two metal gaskets 411 is provided with a protrusion 420.

In the present embodiment, a metal gasket 411 is provided between the limiting device 300 and a non-metal gasket 412. When the clutter on the body 100 is transmitted to the limiting device 300 and then transmitted from the limiting device 300 to the non-metal gasket 412 through the metal gasket 411, the provision of a protrusion 420 on the metal gasket 411 causes the contact area between the metal gasket 411 and the non-metal gasket 412 to be reduced, thereby reducing the amount of clutter transmitted from the limiting device 300 to the non-metal gasket 412 through the metal gasket 411. When the clutter is transmitted to the non-metal gasket 412, the strength of the clutter transmitted to the non-metal gasket 412 is reduced because the non-metal gasket 412 has the effect of shock absorption and noise reduction. Further, a metal gasket 411 is provided between the non-metal gasket 412 and the transducing assembly 200, and by the provision of a protrusion 420 on the metal gasket 411, the contact area between the metal gasket 411 and the transducing assembly 200 is reduced, so that the amount of clutter transmitted from the non-metal gasket 412 to the transducing assembly 200 through the metal gasket 411 is further reduced, thereby reducing the effect of the clutter on the transducing assembly 200, and further improving the measurement accuracy of the ultrasonic flowmeter.

Referring to FIG. 5, on the basis of the foregoing embodiments, the gasket assembly 400 includes four gaskets 410, where three gaskets 410 are metal gaskets 411, and the other gasket is a non-metal gasket 412. Where two metal gaskets 411 are disposed between the non-metal gasket 412 and the limiting device 300. Where the last metal gasket 411 is arranged between the non-metal gasket 412 and the transducing assembly 200. The metal gasket 411 close to the limiting device 300 and the metal gasket 411 close to the transducing assembly 200 are both provided with a protrusion 420.

Referring to FIG. 5, in the present embodiment, when a fluid in the accommodating cavity 110 of the body 100 has a high velocity or a high pressure, the pressure applied by the fluid to the transducing assembly 200 in the fixing hole 120 is also relatively high. At this time, because the contact area between a protrusion 420 of a metal gasket 411 and a non-metal gasket 412 is small, and the non-metal gasket 412 has a weaker press resistant performance, so the protrusion 420 on the metal gasket 411 easily causes the non-metal gasket 412 to be damaged. A metal gasket 411 is disposed between the metal gasket 411 having the protrusion 420 and the non-metal gasket 412, and this metal gasket 411 is a flat gasket having a flat surface, so that the protrusion 420 of the metal gasket 411 can be prevented from directly contacting the non-metal gasket 412, thereby preventing the non-metal gasket 412 from being damaged, and prolonging the service life of the gasket assembly 400.

Referring to FIG. 1 to FIG. 6, on the basis of the aforementioned embodiments, the limiting device 300 is provided with a communication hole 310 along an installation direction of the limiting device 300, the second end 215 is located in the communication hole 310, and the second end 215 located in the communication hole 310 is in clearance fit with the communication hole 310. A surface of the limiting device 300 which is in contact with the gasket assembly 400 is provided with a groove 320 or a projection (not shown in the FIGs), the groove 320 is in communication with the communication hole 310. An outer peripheral wall of the limiting device 300 is tightly connected with the inner peripheral wall of the fixing hole 120 through threads, or the outer peripheral wall of the limiting device 300 is fixedly connected with the inner peripheral wall of the fixing hole 120 through a circlip.

Referring to FIG. 1 to FIG. 6, by making the second end 215 of the transducing assembly 200 reach into the communication hole 310 of the limiting device 300, the gasket assembly 400 is prevented from falling out of a gap between the second end 215 of the transducing assembly 200 and the limiting device 300, and the connection stability of the gasket assembly 400 is improved. The second end 215 reaching into the communication hole 310 is in clearance fit with the inner peripheral wall of the communication hole 310, and thus the clutter on the body 100 can be prevented from transmitting to the transducing assembly 200 from a location where the second end 215 is in direct contact with the limiting device 300, thereby reducing the effect of clutter on the transducing assembly 200. In addition, by providing grooves 320, which are in communication with the communication hole 310, on the surface of the limiting device that is in contact with the gasket 410, and making the surface in the opening direction of the groove 320 abut against the gasket assembly 400, the contact surface 430 between the limiting device 300 and the gasket assembly 400 can be reduced, thereby reducing the amount of clutter transmitted to the gasket assembly 400 through the limiting device 300.

It should be understood that, by providing the projection on a side of the limiting device 300 facing a gasket 410, the limiting device 300 is in contact with the gasket 410 through the projection, and thus the contact area between the limiting device 300 and the gasket 410 can be reduced, thereby reducing the amount of clutter transmitted to the gasket assembly 400 through the limiting device 300. Further, when a side of a gasket 410 close to the limiting device 300 and facing the limiting device 300 is provided with a protrusion 420, the projection of the limiting device 300 may be fittingly contacted with the protrusion 420 of the gasket 410, so that the contact area between the limiting device 300 and the gasket 410 is further reduced, thereby reducing the amount of clutter transmitted from the limiting device 300 to the gasket 410.

Referring to FIG. 6, in a specific implementation, the outer peripheral wall of the limiting device 300 is tightly connected with the inner peripheral wall of the fixing hole 120 through threads, thereby improving the connection stability of the limiting device 300. When a fluid in the accommodating cavity 110 applies a high pressure on the transducing assembly 200, the transducing assembly 200 is prevented from rushing out of the fixing hole 120. In some embodiments, the limiting device 300 may be a fixing nut, an outer peripheral side of the fixing nut is provided with threads, and the inner peripheral wall of the fixing hole 120 may also be provided with threads matching the threads on the outer peripheral side of the fixing nut, so that the fixing nut is connected with the inner peripheral wall of the fixing hole 120 through the threads. In other embodiments, the outer peripheral wall of the limiting device 300 may be fixedly connected with the inner peripheral wall of the fixing hole 120 through a circlip (not shown in the FIGs), thereby improving the convenience of detaching the limiting device 300.

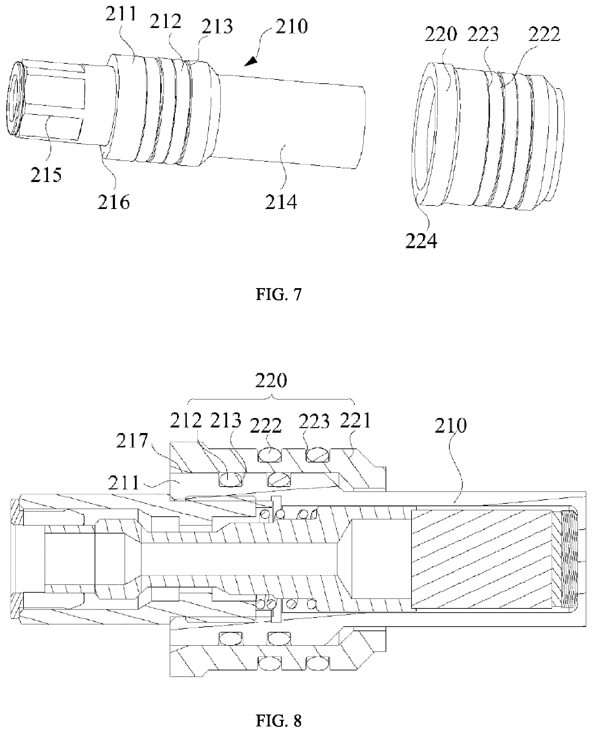

Referring to FIG. 7 and FIG. 8, on the basis of the above-mentioned embodiments, the transducing assembly 200 includes a transducer 210 and an isolating device 220. The transducer 210 has the first end 214 and the second end 215. The isolating device 220 is sleeved on the first end 214 along an axial direction of the transducer 210, and the first end 214 is hermetically connected with the isolating device 220, so that the first end 214 is hermetically connected with the fixing hole 120 by means of the isolating device 220. A side of a connecting part 211 facing a gasket 410 has a first contact surface abutting against the gasket 410, and a side of the isolating device 220 facing the gasket 410 has a second contact surface abutting against the gasket 410, so that protrusions 420 on the gasket 410 is in contact with the first contact surface and/or the second contact surface.

Referring to FIG. 7 and FIG. 8, in the present embodiment, by connecting the transducer 210 and the inner peripheral wall of the fixing hole 120 through the isolating device 220, the clutter on the body 100 can be prevented from being directly transmitted to the transducer 210 through the outer peripheral wall of the fixing hole 120, thereby reducing the strength of the clutter transmitted to the transducer 210.

Referring to FIG. 5 and FIG. 7, in other embodiments, both the first end 214 and the second end 215 of the transducing assembly 200 are located on the transducer 210, and the first end 214 is used to be hermetically connected with the isolating device 220. By sleeving the isolating device 220 on the first end 214, the first end 214 is hermetically connected with the isolating device 220, so as to achieve the hermetical connection between the isolating device 220 and the transducer 210. The outer peripheral wall of the isolating device 220 is hermetically connected with the inner peripheral wall of the fixing hole 120, so as to achieve an indirect hermetical connection between the transducer 210 and the fixing hole 120, thereby preventing a fluid in the accommodating cavity 110 of the body 100 from leaking through a gap between the isolating device 220 and the fixing hole 120, or flowing out through a gap between the isolating device 220 and the transducer 210, and further improving the sealing property between the transducing assembly 200 and the fixing hole 120.

With continued reference to FIG. 7 and FIG. 8, in some embodiments, the shape of the transducer 210 may be cylindrical, an outer diameter of the first end 214 may be larger relative to the second end 215, so that a side of the first end 214 close to the second end 215 forms a first contact surface 216 extending along the radial direction of the first end 214. The isolating device 220 sleeved on the first end 214 has a second contact surface 224, and the second contact surface 224 and the first contact surface 216 are disposed on the same side. The first contact surface 216 and the second contact surface 224 are used to abut against the gasket 410.

Referring to FIG. 5 and FIG. 7, in an exemplary embodiment, a plurality of protrusions 420 of a gasket 410 close to the transducing assembly 200 may be two discontinuous annular protrusions, the two discontinuous annular protrusions are concentrically disposed. A plurality of protrusions 420 close to the center of the gasket 410 may abut against the first contact surface 216, and the sum of areas of a plurality of contact surfaces 430 between the plurality of protrusions 420 and the first contact surface 216 is smaller than the surface area of the first contact surface 216. A plurality of protrusions 420 away from the center of the gasket 410 may abut against the second contact surface 224, and the sum of areas of a plurality of contact surfaces 430 between the plurality of protrusions 420 and the second contact surface 224 is smaller than the surface area of the second contact surface 224. Therefore, the gasket 410 having two annular protrusions can reduce both the contact area with the transducer 210 and the contact area with the isolating device 220, thereby reducing the amount of clutter transmitted to the transducer 210 through the gasket 410.

Referring to FIG. 5 to FIG. 9, on the basis of the foregoing embodiments, the first end 214 is provided with the connecting part 211, the connecting part 211 is hermetically connected with the isolating device 220; the connecting part 211 has the first contact surface 216.

Referring to FIG. 7 to FIG. 9, in an exemplary embodiment, the connecting part 211 may be a portion of the first end 214, the connecting part 211 may be located at a side close to the second end 215, and a side of the connecting part 211 close to the gasket assembly 400 has the first contact surface 216. The connecting part 211 may also be the entire portion of the first end 214, for example, the first end 214 is the connecting part 211, and an outer peripheral surface of the first end 214 is all located in the isolating device 220.

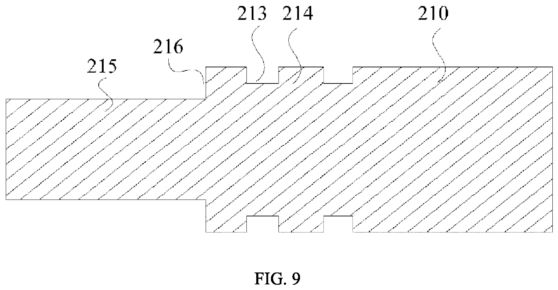

Referring to FIG. 8 and FIG. 9, it should be noted that, the first end 214 of the transducer 210 may be a cylinder structure with variable outer diameters or a cylinder structure with a same outer diameter. When the first end 214 is a cylinder structure with variable outer diameters, the outer diameter of the connecting part 211 is larger than the outer diameters of other portions of the first end 214. When the first end 214 is a cylinder structure with a same outer diameter, the outer diameter of the connecting part 211 is the same as the outer diameters of other portions of the first end 214. Where, a size of an outer peripheral surface of the connecting part 211 and sizes of outer peripheral surfaces of other portions of the first end 214 may be adjusted according to actual requirements, which is not specifically limited herein.

Referring to FIG. 2, FIG. 7 and FIG. 8, on the basis of the above embodiments, the isolating device 220 includes an isolating sleeve 221 and at least one first sealing ring 222. The isolating sleeve 221 is sleeved on the connecting part 211, and the isolating sleeve 221 is hermetically connected with the connecting part 211. An outer peripheral wall of the isolating sleeve 221 is provided with at least one first annular groove 223, the first annular groove 223 is wound around the outer peripheral wall of the isolating sleeve 221, and each first sealing ring 222 is fixed in one first annular groove 223. The isolating sleeve 221 is hermetically connected with the inner peripheral wall of the fixing hole 120 through at least one first sealing ring 222, and a first gap 225 is provided between an outer wall of the isolating sleeve 221 and the inner peripheral wall of the fixing hole 120.

Referring to FIG. 8 and FIG. 9, in the present embodiment, the isolating device 220 includes the isolating sleeve 221 and the first sealing ring 222, the isolating sleeve 221 is sleeved on the connecting part 211, and the second contact surface may be located on the isolating sleeve 221. The first annular groove 223 may be coaxial with the isolating sleeve 221. The first sealing ring 222 may have a certain elasticity, and by means of interference fit between the first sealing ring 222 and the inner peripheral wall of the fixing hole 120, sealing connection between the isolating sleeve 221 and the inner peripheral wall of the fixing hole 120 is achieved, the isolating sleeve 221 is in contact with the inner peripheral wall of the fixing hole 120 only through the first sealing ring 222, and the contact area between the inner peripheral wall of the fixing hole 120 and the isolating sleeve 221 is reduced, thereby reducing the amount of clutter or noise on the body 100 transmitted to the isolating sleeve 221, further reducing the amount of the clutter transmitted to the transducer 210 through the isolating sleeve 221, and reducing the effect of the clutter on the transducer 210.

It should be understood that, one first annular groove 223 on the isolating sleeve 221 may be provided with a plurality of first sealing rings 222. There may be a plurality of first annular grooves 223 on the isolating sleeve 221, and there may also be a plurality of first sealing rings 222. By disposing the plurality of first sealing rings 222, the sealing property between the isolating sleeve 221 and the inner peripheral wall of the fixing hole 120 can be improved. It should be noted that, when the isolating device includes the isolating sleeve 221 and the first sealing ring 222, the isolating sleeve 221 has the second contact surface 224, that is, the second contact surface 224 is located at one end of the isolating sleeve close to the gasket assembly 400.

Referring to FIG. 2, FIG. 7, FIG. 8 and FIG. 9, on the basis of the above embodiments, the transducer 210 further includes at least one second sealing ring 212. An outer peripheral wall of the connecting part 211 is provided with at least one second annular groove 213. The second annular groove 213 is wound around the outer peripheral wall of the connecting part 211, and each second sealing ring 212 is fixed in one second annular groove 213. The connecting part 211 is hermetically connected with the isolating sleeve 221 through at least one second sealing ring 212. A second gap 217 is provided between an outer wall of the connecting part 211 and an inner peripheral wall of the isolating sleeve 221.

Referring to FIG. 8 and FIG. 9, in the present embodiment, the second annular groove 213 is provided on the connecting part 211, and the second sealing ring 212 is fixed in the second annular groove 213. So that the connecting part 211 is hermetically connected with the inner peripheral wall of the isolating sleeve 221 through the second sealing ring 212, thereby reducing the contact area between the connecting part 211 and the isolating sleeve 221, reducing the amount of the clutter transmitted to the connecting part 211 through the isolating sleeve 221, and further reducing the effect of the clutter on the transducer 210.

It should be understood that, the second sealing ring 212 may be made of a material having a certain elasticity, so that interference fit connection is formed between the connecting part 211 equipped with the second sealing ring 212 and the inner peripheral wall of the isolating sleeve 221. The connecting part 211 may have a plurality of second annular grooves 213, and one or more second sealing rings 212 may be fixed in each second annular groove 213. By increasing the number of the second sealing rings 212, the sealing performance and connection stability between the isolating sleeve 221 and the connecting part 211 can be improved.

On the basis of the above embodiments, the material of the isolating sleeve 221 is special engineering plastic or metal. The material of the first sealing ring 222 and the second sealing ring 212 is rubber.

In some embodiments, the material of the isolating sleeve 221 is special engineering plastic, the special engineering plastic and the material of the non-metal gasket 412 may be the same material. This can further improve the effects of shock absorption and noise reduction of the isolating sleeve 221, thereby further reducing the effect of clutter on the transducer 210, and further improving the measurement accuracy of the ultrasonic flowmeter. In addition, the first sealing ring 222 and the second sealing ring 212 may be made of rubber material, because the rubber material has good effects of sound absorption and noise reduction. By using the first sealing ring 222 and the second sealing ring 212 made of rubber material, the strength of the clutter and the transmission amount of the clutter can be reduced, thereby reducing the effect of the clutter on the transducer 210, and further improving the measurement accuracy of the ultrasonic flowmeter.

The examples or embodiments in the present specification are described in a progressive manner, each embodiment focuses on differences from other embodiments, and the same and similar parts between each embodiment may be referred to each other.

It should be noted that, references to "one embodiment', "embodiment", "exemplary embodiment", "some embodiments", etc., in the specification, indicate that the embodiments described may include particular features, structures, or characteristics, but each embodiment may not necessarily include the particular features, structures, or characteristics. Furthermore, such phrases do not necessarily refer to the same embodiment. Furthermore, when particular features, structures, or characteristics are described in connection with embodiments, it is within the knowledge scope of those skilled in the art to implement such features, structures, or characteristics in connection with other embodiments that are explicitly or not explicitly described.

In general, the terms should be at least partially understood from usage in the context. For example, at least partially depending on the context, the term "one or more" as used herein, can be used to describe any feature, structure, or characteristic in the singular, or can be used to describe combinations of features, structures, or characteristics in the plural. Similarly, at least partially depending on the context, terms such as "a" or "the" may also be understood to convey singular or plural.

It should be readily understood that, "on", "above" and "over" in the present disclosure should be explained in the broadest sense, such that "on" not only means "directly on something", but also includes the meaning of "on something" with features or layers therebetween, and "above" or "over" not only includes the meaning of "above something" or "over something", but also includes the meaning of "above something" or "over something" with no features or layers therebetween (namely, directly on something).

Furthermore, spatial relative terms, such as "below", "under", "beneath", "above", "over" and the like, may be used herein for ease of description to describe relationship of one element or feature relative to other elements or features as illustrated. Spatially relative terms are intended to include different orientations of devices in use or operation in addition to the orientations shown in the figures. Devices may have other orientations (rotated by 90 degrees or in other orientations) and the spatially relative description words used herein may be similarly explained accordingly.

Finally, it should be noted that, the foregoing embodiments are merely intended for describing the technical solutions of the present application rather than limiting the present application. Although the present application is described in detail with reference to the foregoing embodiments, persons of ordinary skill in the art should understand that they may still make modifications to the technical solutions described in the foregoing embodiments, or make equivalent replacements to some or all technical features thereof; these modifications or replacements do not make the essence of the corresponding technical solutions depart from the scope of the technical solutions of the embodiments of the present application.

## Claims

1. An ultrasonic flowmeter, comprising a body, a transducing assembly, a limiting device, and a gasket assembly;
wherein an accommodating cavity for a fluid to be measured to flow is provided in the body, a side wall of the body is provided with a fixing hole in communication with the accommodating cavity, and the transducing assembly, the gasket assembly and the limiting device are located in the fixing hole;
the transducing assembly is hermetically connected with an inner peripheral wall of the fixing hole, a first end of the transducing assembly faces the accommodating cavity, a second end of the transducing assembly faces the limiting device and is in clearance fit with the limiting device, the gasket assembly is sleeved on the second end of the transducing assembly, and the limiting device is in contact with the transducing assembly by means of the gasket assembly; the limiting device is fixedly connected with the inner peripheral wall of the fixing hole;
the gasket assembly comprises at least one gasket, and at least one surface of the at least one gasket is provided with one or more protrusions.

2. The ultrasonic flowmeter according to claim 1, wherein the gasket is provided with a through hole, and the gasket is sleeved on the second end of the transducing assembly by means of the through hole;
each of the protrusions has a contact surface, and a sum of areas of all contact surfaces is smaller than a surface area of a side, where the protrusions are located, of the gasket.

3. The ultrasonic flowmeter according to claim 2, wherein the gasket assembly comprises a plurality of gaskets, and the plurality of gaskets comprise a metal gasket and/or a non-metal gasket.

4. The ultrasonic flowmeter according to claim 3, wherein the gasket assembly comprises three gaskets, wherein two of the three gaskets are metal gaskets, and the other gasket is the non-metal gasket;
wherein one of the metal gaskets is disposed between the non-metal gasket and the limiting device, and the other of the metal gaskets is disposed between the non-metal gasket and the transducing assembly;
the two metal gaskets are provided with the protrusions, respectively.

5. The ultrasonic flowmeter according to claim 3, wherein the gasket assembly comprises four gaskets, wherein three gaskets are metal gaskets, and the other gasket is the non-metal gasket;
wherein two of the metal gaskets are disposed between the non-metal gasket and the limiting device;
wherein the other of the metal gaskets is disposed between the non-metal gasket and the transducing assembly;
the metal gasket close to the limiting device and the metal gasket close to the transducing assembly are provided with the protrusions, respectively.

6. The ultrasonic flowmeter according to any one of claims 3 to 5, wherein a material of the non-metal gasket is plastic;
wherein the plastic is one of polyphenylene sulfide, polyimide, polyether ether ketone, liquid crystal polymer, or polysulfone.

7. The ultrasonic flowmeter according to any one of claims 1 to 5, wherein the limiting device is provided with a communication hole along an installation direction of the limiting device, the second end is located in the communication hole, and the second end located in the communication hole is in clearance fit with the communication hole;
a surface of the limiting device which is in contact with the gasket assembly is provided with a groove or a projection, the groove is in communication with the communication hole;
an outer peripheral wall of the limiting device is tightly connected with the inner peripheral wall of the fixing hole through threads,
or the outer peripheral wall of the limiting device is fixedly connected with the inner peripheral wall of the fixing hole through a circlip.

8. The ultrasonic flowmeter according to claim 2, wherein the transducing assembly comprises a transducer and an isolating device;
the transducer has the first end and the second end;
the isolating device is sleeved on the first end along an axial direction of the transducer, and the first end is hermetically connected with the isolating device, so that the first end is hermetically connected with the fixing hole by means of the isolating device;
a side of the first end facing the gasket has a first contact surface abutting against the gasket, a side of the isolating device facing the gasket has a second contact surface abutting against the gasket, so that the protrusions on the gasket is in contact with the first contact surface and/or the second contact surface.

9. The ultrasonic flowmeter according to claim 8, wherein the first end is provided with a connecting part, the connecting part is hermetically connected with the isolating device; the connecting part has the first contact surface.

10. The ultrasonic flowmeter according to claim 9, wherein the isolating device comprises an isolating sleeve and at least one first sealing ring;
the isolating sleeve is sleeved on the connecting part, and the isolating sleeve is hermetically connected with the connecting part;
an outer peripheral wall of the isolating sleeve is provided with at least one first annular groove, the first annular groove is wound around the outer peripheral wall of the isolating sleeve, the first sealing ring is fixed in the first annular groove, the isolating sleeve is hermetically connected with the inner peripheral wall of the fixing hole through the first sealing ring, and a first gap is provided between an outer wall of the isolating sleeve and the inner peripheral wall of the fixing hole.

11. The ultrasonic flowmeter according to claim 10, wherein it further comprises at least one second sealing ring;
an outer peripheral wall of the connecting part is provided with at least one second annular groove, the second annular groove is wound around the outer peripheral wall of the connecting part, the second sealing ring is fixed in one second annular groove, and the connecting part is hermetically connected with the isolating sleeve through at least one second sealing ring; and
a second gap is provided between an outer wall of the connecting part and an inner peripheral wall of the isolating sleeve.
